Europäisches Patentamt

European Patent Office

Office européen des brevets

(11) Veröffentlichungsnummer: **0 065 065**
**B1**

# (12) EUROPÄISCHE PATENTSCHRIFT

(45) Veröffentlichungstag der Patentschrift:
03.04.85

(21) Anmeldenummer: 82100502.2

(22) Anmeldetag: 26.01.82

(51) Int. Cl.⁴: **C 04 B 28/00, C 04 B 11/30**

(54) Wasserfester Calciumsilicat enthaltender Gipsbaustoff und Verfahren zu seiner Herstellung.

(30) Priorität: 13.05.81 DE 3118949

(43) Veröffentlichungstag der Anmeldung:
24.11.82 Patentblatt 82/47

(45) Bekanntmachung des Hinweises auf die Patenterteilung: 03.04.85 Patentblatt 85/14

(84) Benannte Vertragsstaaten:
AT BE DE FR GB IT NL

(56) Entgegenhaltungen:
DE-A- 2 419 562
DE-A- 2 912 148
DE-B- 1 269 935
DE-C-   385 454
FR-A- 1 558 566

(73) Patentinhaber: BABCOCK-BSH AKTIENGESELL-
SCHAFT vormals Büttner-Schilde-Haas AG
Parkstrasse 29 Postfach 4 und 6
D-4150 Krefeld 11 (DE)

(72) Erfinder: Hildebrandt, Ulrich, Dr. Prof.
Heiligenseestrasse 186
D-1000 Berlin 27 (DE)
Erfinder: Hose, Horst, Dr. Dipl.-Chem.
Umbachsweg 43
D-3500 Kassel (DE)
Erfinder: Neumann-Venevere, Peter, Prof. Dr. Ing.
Sohlweg 6
D-3014 Laatzen 5 (DE)

(74) Vertreter: Planker, Karl-Josef, Dipl.-Phys.
c/o BABCOCK-BSH AKTIENGESELLSCHAFT Parkstrasse 29 Postfach 4 + 6
D-4150 Krefeld 11 (DE)

## Beschreibung

Die Erfindung betrifft ein Verfahren zur Herstellung eines wasserbeständigen Baustoffs aus einer Mischung von mineralischen Stoffen mit mindestens 60 % hydratationsfähigen oder in solche überführbaren Calciumsulfatverbindungen, wobei in einer Stufe ein Kalkverbindungen und Silicium-Dioxid enthaltendes mineralisches Gemenge bei einer unterhalb der Sintergrenze liegenden Temperatur gebrannt wird und wobei in einer weiteren Stufe das thermisch umgewandelte Gemenge mit dem Calciumsulfat gemischt wird.

Bei einem bekannten Verfahren zur Herstellung von Baustoffen auf Gipsbasis für wasserfeste Produkte, vergleiche DE-A 29 12 148, wird in einer ersten Brennstufe ein Gemenge aus tonigsilikatisch ungesättigten Kalkverbindungen mit einer unterhalb der Sintergrenze liegenden Temperatur, z. B. 870 °C, gebrannt. In einer zweiten Behandlungsstufe werden die zu verarbeitenden Gipse mit dem in der ersten Brennstufe vorbehandelten Gemenge vermischt und in einem niedrigen Temperaturbereich, z. B. 120 bis 180 °C, weiter behandelt. Das so erbrannte Gemenge läßt sich als Bindemittel verwenden.

Aufgabe der vorliegenden Erfindung ist es, einen wasserfesten Gipsbaustoff zu schaffen, bei dem die Bildung von schädlichen Tricalciumaluminaten weitgehend ausgeschlossen ist und fast ausschließlich hydratationsfähige Calciumsilicatverbindungen erbrannt werden, die mit den zugegebenen Gipsen, welche als Halbhydrate und/oder Anhydrite vorliegen bzw. in solche überführt werden, formbeständige und im Falle einer späteren Durchfeuchtung kriechfeste Baustoffe bilden.

Dies wird nach der Erfindung dadurch erreicht, daß das mineralische Gemenge durch Mischen und Homogenisieren von Calciumcarbonat, Calciumoxid und/oder Calciumhydroxid (einzeln oder als Gemisch) und Silicium-Dioxid in feinverteilter Form in einem Molverhältnis $CaO : SiO_2$ von 3 bis 1,55 : 1 unter Zugabe eines Mineralisators, z. B. Borax, hergestellt wird, daß dieses Gemenge einen Tonerdegehalt von weniger als 1 % hat, daß der Brennprozeß in einem Temperaturbereich zwischen 1 000 und 1 300 °C durchgeführt wird und daß das thermisch umgewandelte Gemenge vor dem Beimischen des Calciumsulfats plötzlich abgekühlt wird.

Vorzugsweise soll dabei der Tonerdegehalt kleiner als 1 %.

Nach einem erfindungsgemäßen Herstellungsverfahren können die so gewonnenen reinen Calciumsilicate beispielsweise granuliert sein und zwischengelagert werden, um später feingemahlen mit ebenfalls feingemahlenen zwischengelagerten Calciumsulfat-Halbhydraten, z. B. handelsüblicher Stuckgips, auf kaltem Wege vermischt zu werden.

Nach einem weiteren erfindungsgemäßen Herstellungsverfahren wird das heiße Calciumsilicatprodukt durch Zugabe von kaltem Calciumsulfat-Dihydrat abgeschreckt und die übertragene Wärme zur Umwandlung des Dihydrates in Halbhydrat bzw. Anhydrit ausgenutzt. Letztere Vorgänge können noch durch eine zusätzliche Wärmeeingabe (weitere Brennstufe) und innige Vermischung in einem Mischaggregat (z. B. Mahltrommel) unterstützt werden.

Weitere Einzelheiten über die Art der beispielsweise verwendeten Stoffe und mögliche Führungen des Herstellungsverfahrens sind den Patentansprüchen und den nachfolgenden Ausführungsbeispielen zu entnehmen :

Beispiel A

Als Ausgangsrohstoffe wurden folgende Stoffe verwendet :

Quarzmehl in der Zusammensetzung 99,8 % $SiO_2$, 0,025 % $Fe_2O_3$ und 0,15 % $Al_2O_3$ bezogen auf Gesamtmasse. Das Quarzmehl wies einen Feinheitsgrad von 4 800 $cm^2/g$ nach Blaine auf.

Kalkstein der Zusammensetzung 92,8 % $CaCO_3$, 5,9 % $SiO_2$, 0,2 % $Al_2O_3$, 0,3 % $Fe_2O_3$, 0,1 % $Na_2O$, 0,1 % $K_2O$ und 0,6 % $SO_3$, ebenfalls bezogen auf Gesamtmasse.

Der Kalkstein wurde auf einen Feinheitsgrad von 3 700 $cm^2/g$ vermahlen.

In einem aerodynamischen Mischer wurden etwa 78 % Kalksteinmehl mit 21 % Quarzmehl und 1 % Borax als Mineralisator vermischt und auf einem Granulierteller unter Zuhilfenahme von 1 %iger Wasserglaslösung granuliert. Die entstehenden Granalien hatten einen Durchmesser von 3 bis 7 mm. Die obigen Prozentangaben beziehen sich ebenfalls auf Gesamtmasse.

Das Granulat wurde in einen indirekt beheizten Drehofen im Gegenstrom eingegeben und bei 1 200 °C 1 1/2 Stunden lang gebrannt, ausgetragen und dabei sofort auf eine Temperatur unter 600 °C abgeschreckt.

Zur Herstellung eines wasserfesten Gipsbaustoffes wurden 65 % Stuckgips mit 35 % feingemahlenen (kleiner 90 μm) vom obigen Brennprodukt in Wasser eingegeben, wobei das Wasser/Feststoffverhältnis 0,4 betrug, homogenisiert und in Probekörper der Ausmaße 4 cm × 4 cm × 16 cm gegossen und nach einer Stunde ausgeschalt. Diese Probekörper wurden zum Nachhydratisieren sieben Tage lang bei Normalklima gelagert.

Zur Prüfung der Raumbeständigkeit wurde eine Wasserlagerung über mehrere Monate vorgenommen, wobei die Prüflinge rissefrei und kantenscharf blieben. Zur Prüfung der Kriechfestigkeit wurden die Prüflinge einer Dauerlast von 2,5 $N/mm^2$ unter feuchten Bedingungen (Wasserlagerung) senkrecht zu ihrer Längsachse ausgesetzt. Zwölf Stunden nach Lastaufgabe kam die Verformung der Prüflinge in Richtung des Druckes zum Stillstand. Es trat eine maximale Verformung von 0,2 mm/m auf, welche sich in-

nerhalb eines Zeitraumes von vier Wochen nicht geändert hat.

Beispiel B

Es wurden 200 kg feines Kalksteinmehl, 60 kg feingemahlener Sand und 2,6 kg Borax, in der Zusammensetzung und Feinheit wie in Beispiel A angegeben, aerodynamisch homogenisiert und unter Verwendung von 1 %iger Wasserglaslösung als Bindemittel auf einem Granulierteller granuliert und an Luft getrocknet. Der Durchmesser des Granulates war kleiner als 10 mm. Das Granulat wurde in einem Drehrohrofen im Gegenstrom bei 1 150 °C und einer mittleren Verweilzeit von einer Stunde in ein hydrationsfähiges Produkt umgewandelt. Das heiße gebrannte Produkt wurde alsdann zusammen mit 340 kg Calciumsulfat-Dihydrat in eine kühle Eingangsmischzone einer Niederbrandtrommel eingegeben. Die Niederbrandtrommel wird erforderlichenfalls noch nach der kühlen Eingangszone im Gleichstrom beheizt, so daß am Auslauf eine Materialtemperatur von ca. 190 °C herrscht. Die Verweilzeit in dieser Trommel betrug ca. fünfundvierzig Minuten. Das so erhaltene Produkt wurde in einer Kugelmühle auf eine Korngröße kleiner als 90 μm gemahlen und homogenisiert. Unter Zugabe und Vermischung mit Wasser, Wasser/Feststoffgehalt gleich 0,65, wurden aus dem obigen Bindemittel Platten mit den Ausmaßen 666 mm × 500 mm × 80 mm gegossen und nach zehn Minuten aus der Gießform entfernt.

Die daraus hergestellten Prüfkörper wurden einem Kriechfestigkeitstest, wie bereits beim Beispiel A beschrieben, mit einer Belastung von 2,5 N/mm² unterzogen.

Die maximale Verformung betrug etwa 3 mm/m nach einer Woche und blieb noch nach drei Monaten konstant.

Die Erfindung ist selbstverständlich nicht auf die in den Ausführungsbeispielen angegebenen Stoffzusammensetzungen und Betriebsdaten beschränkt.

Es sei beispielsweise darauf hingewiesen, daß bei einem Gipsmasseanteil von 80 % noch brauchbare Ergebnisse zu erzielen sind.

## Ansprüche

1. Verfahren zur Herstellung eines wasserbeständigen Baustoffs aus einer Mischung von mineralischen Stoffen mit mindestens 60 % hydrationsfähigen oder in solche überführbaren Calciumsulfatverbindungen, wobei in einer Stufe ein Kalverbindungen und Silicium-Dioxid enthaltendes mineralisches Gemenge bei einer unterhalb der Sintergrenze liegenden Temperatur gebrannt wird und wobei in einer weiteren Stufe das thermisch umgewandelte Gemenge mit dem Calciumsulfat gemischt wird dadurch gekennzeichnet, daß das mineralische Gemenge durch Mischen und Homogenisieren von Calciumcarbonat, Calciumoxid und/oder Calciumhydroxid (einzeln oder als Gemisch) und Silicium-Dioxid in feinverteilter Form in einem Molverhältnis CaO : SiO₂ von 3 bis 1,55 : 1 unter Zugabe eines Mineralisators, z. B. Borax, hergestellt wird, daß dieses Gemenge einen Tonerdegehalt von weniger als 1 % hat, daß der Brennprozeß in einem Temperaturbereich zwischen 1 000 und 1 300 °C durchgeführt wird und daß das thermisch umgewandelte Gemenge vor dem Beimischen des Calciumsulfats plötzlich abgekühlt wird.

2. Verfahren nach Anspruch 1, dadurch gekennzeichnet, daß feingemahlener Kalkstein und Sand verwendet werden.

3. Verfahren nach Anspruch 1 oder 2, dadurch gekennzeichnet, daß das homogenisierte Gemenge der Calcium- und Siliciumverbindungen nebst Mineralisator unter Zuhilfenahme eines Binders, z. B. Wasserglas, vor dem Brennprozeß granuliert wird.

4. Verfahren nach einem der Ansprüche 1 bis 3, dadurch gekennzeichnet, daß das gebrannte Produkt (Calciumsilicat) und gegebenenfalls auch das Calciumsulfat vor der Vermischung fein gemehlen werden.

5. Verfahren nach einem der Ansprüche 1 bis 4, dadurch gekennzeichnet, daß das Brennen des Calciumsilicates in einer im Gegenstrom betriebenen Brennanlage erfolgt.

6. Verfahren nach einem der Ansprüche 1 bis 5, dadurch gekennzeichnet, daß die Wärmebehandlung des Calciumsilicat-Gips-Gemisches in einer im Gleichstrom betriebenen Anlage (z. B. Drehofen, Mahlbrennanlage o. ä.) erfolgt.

7. Verfahren nach Anspruch 5 und 6, dadurch gekennzeichnet, daß der Gips in einer zwischengeschalteten Kühl- bzw. Wärmeaustauschzone dosiert aufgegeben wird.

## Claims

1. Method for producing a waterproof building material from a mixture of mineral substances containing a minimum of 60 % hydratable calcium sulphate compounds or other calcium sulphate compounds capable of being converted to hydratable compounds, wherein a mineral mixture containing lime compounds and silicium dioxide is burnt in one stage at a temperature below the sintering temperature and wherein, in another stage, the mixture transformed by exposure to heat is mixed with calcium sulphate, characterized in that the mineral mixture is produced by mixing and homogenizing calcium carbonate, calcium oxide and/or calcium hydroxide (individually or as a mixture), and silicium dioxide at a mol ratio of CaO : SiO₂ from 3 to 1.55 : 1 with the addition of a mineralizer such as borax, that this mixture contains less than 1 % alumina, that burning takes place within the temperature range 1.000 to 1.300 °C, and that the thermally converted mixture is suddenly cooled before calcium sulphate is admixed.

2. Process according to claim 1, characterized in that the lime and sand used are ground.

3. Process according to claims 1 or 2, characterized in that the homogenized mixture of calcium and silicium compounds, with mineralizer, is granulated before burning with the help of a binder such as water glass.

4. Process according to one of claims 1 to 3, characterized in that burnt product (calcium silicate), and calcium sulphate, if necessary, are ground before mixing.

5. Process according to one of claims 1 to 4, characterized in that calcium silicate is burnt in a kiln operating on the countercurrent principle.

6. Process according to one of claims 1 to 5, characterized in that the mixture of calcium silicate and gypsum is heat-treated in a co-current plant (e. g. rotary kiln, integrated grinding and burning plant or similar).

7. Process according to claims 5 and 6, characterized in that gypsum metering takes place in an intermediate cooling of heat exchanging zone.

**Revendications**

1. Procédé de préparation d'un matériau de construction résistant à l'eau à partir d'un mélange de substances minérales avec au moins 60 % de composés de sulfate de calcium hydratables ou convertissables en ces derniers, dans lequel dans une étape un mélange minéral contenant des composés de chaux et du dioxyde de silicium est calciné à une température située en dessous de la limite de frittage et dans lequel dans une étape ultérieure le mélange thermiquement transformé est mélangé au sulfate de calcium, caractérisé en ce que le mélange minéral est préparé par mélange et homogénéisation de carbonate de calcium, oxyde de calcium et/ou hydroxyde de calcium (isolément ou en mélange) et de dioxyde de silicium, sous une forme finement divisée, en un rapport molaire de CaO/SiO$_2$ de 3 à 1,55/1, avec addition d'un minéralisateur, par exemple du borax, en ce que ce mélange présente une teneur en alumine inférieure à 1 %, en ce que le processus de calcination est effectué dans une gamme de température comprise entre 1 000 et 1 300 °C et en ce que le mélange thermiquement transformé est brusquement refroidi avec l'addition du sulfate de calcium.

2. Procédé suivant la revendication 1, caractérisé en ce qu'on utilise du calcaire finement broyé et du sable.

3. Procédé suivant l'une des revendications 1 et 2, caractérisé en ce que le mélange homogénéisé des composés de calcium et de silicium, ainsi que du minéralisateur, est granulé avant le processus de calcination à l'aide d'un liant, par exemple du verre soluble.

4. Procédé suivant l'une des revendications 1 à 3, caractérisé en ce que le produit calciné (silicate de calcium) et éventuellement également le sulfate de calcium sont finement broyés avant le mélange.

5. Procédé suivant l'une des revendications 1 à 4, caractérisé en ce que la calcination du silicate de calcium est effectuée dans une installation de calcination qui fonctionne en contre-courant.

6. Procédé suivant l'une des revendications 1 à 5, caractérisé en ce que le traitement thermique du mélange de silicate de calcium-gypse est effectué dans une installation qui fonctionne en courant parallèle (par exemple un four rotatif, une installation de calcination et de broyage, entre autres).

7. Procédé suivant l'une des revendications 5 et 6, caractérisé en ce que le gypse est alimenté de manière dosée dans une zone intercalaire d'échange de froid ou de chaleur.